# EUROPÄISCHE PATENTANMELDUNG

(11) **EP 2 946 909 A1**
(43) Veröffentlichungstag der Anmeldung: **25.11.2015**
(21) Anmeldenummer: 14169424.0
(22) Anmeldetag: 22.05.2014
(51) Int. Cl.: B29C 67/00

(54) **Vorrichtung zum Aufbau dreidimensionaler Objekte**

(71) Anmelder: 3d-figo GmbH, 33154 Salzkotten (DE)
(72) Erfinder: Kollenberg, Wolfgang, 50321 Brühl (DE); Schlautmann, Philipp, 33154 Salzkotten (DE)
(74) Vertreter: Buchenau, Thomas

(57) **Zusammenfassung**

Die Erfindung betrifft eine Vorrichtung zum Aufbau dreidimensionaler Objekte gemäß dem Oberbegriff des Anspruchs 1. Der Erfindung liegt die Aufgabe zugrunde, eine Vorrichtung zum Aufbau dreidimensionaler Objekte zur Verfügung zu stellen, deren Wartungsaufwand unabhängig von der Wahl des Aufbaumaterials reduziert ist. Eine erfindungsgemäße Vorrichtung (10) umfasst dazu einen Prozessraum (30) mit mindestens einem, innerhalb des Prozessraums (30) mit Hilfe einer Antriebseinheit in mindestens einer Richtung verfahrbaren Funktionselements (88) zum Steuern eines Aufbauprozesses, wobei die Antriebseinheit mindestens ein Führungselement (52, 54, 72, 76) und mindestens ein mit dem Führungselement (52, 54, 72, 76) funktional verbundenes und relativ zu diesem bewegliches Antriebselement umfasst. Dabei sind das mindestens eine Führungselement (52, 54, 72, 76) und das mindestens eine Antriebselement (74) in mindestens einem, durch mindestens ein Separationselement (66) von den Prozessräumen (30) räumlich abgegrenzten Antriebsraum (64, 90) angeordnet.

## Beschreibung

Die Erfindung betrifft Vorrichtungen zum Aufbau dreidimensionaler Objekte gemäß dem Oberbegriff des Anspruchs 1.

Die Erfindung betrifft insbesondere Vorrichtungen, mit welchen pulverförmige Medien als Aufbaumaterial zu dreidimensionalen Objekten verarbeitet werden. Dies erfolgt üblicherweise durch wiederholte Anordnung von Pulverschichten, insbesondere mit Dicken von 10 µm bis 200 µm, in einem Bauraum, durch Zugabe eines Bindemittels zu diskreten Bereichen der Pulverschicht und Aushärten dieser Bereiche. Durch Wiederholung des Vorganges können auf bekannte Art und Weise beliebige dreidimensionale Strukturen ausgebildet werden.

Hinsichtlich der Funktionsweise und Möglichkeiten der Ausbildung solcher Vorrichtungen wird insbesondere auf EP 0 949 993 B2, US 6,007,318 A, DE 10 2007 050 953 A1, DE 10 2009 055 966 A1, DE 2009 056 694 B4 und DE 10 2012 004 213 A1 verwiesen. In diesen Druckschriften sind verschiedene Vorrichtungen zum Aufbau dreidimensionaler Objekte beschrieben. Solche Vorrichtungen werden auch als 3D-Drucker bezeichnet. Auf die in diesen Druckschriften beschriebenen Details, insbesondere hinsichtlich der verschiedenen Möglichkeiten des Antriebs von Druckköpfen, Stempeln zur Förderung von Pulver in einen Prozessraum und bauraumseitigen Stempeln oder sonstigen Funktionselementen, wird hiermit explizit Bezug genommen.

In der Praxis hat sich gezeigt, dass es bei Verwendung von relativ harten Werkstoffen als Aufbaumaterial, insbesondere bei Verwendung keramischer Pulver, in Verbindung mit den aus dem Stand der Technik bekannten Vorrichtungen zu hohem, abrasivem Verschleiß kommt. Dieser Verschleiß kommt im Wesentlichen dadurch zustande, dass sich das Aufbaumaterial innerhalb der Vorrichtung an bewegten Elementen ablagert und dort zu erhöhter Reibung führt. Dies gilt insbesondere für die Elemente der Antriebseinheiten solcher Vorrichtungen. Dies sind beispielsweise als Führungselemente dienende Führungsstangen und auf den Führungsstangen gelagerte, bewegte Antriebselemente. Der erhöhte Verschleiß führt zu einem hohen Wartungsaufwand und hohen Unterhaltungskosten.

Der Erfindung liegt die Aufgabe zugrunde, eine Vorrichtung zum Aufbau dreidimensionaler Objekte zur Verfügung zu stellen, deren Wartungsaufwand unabhängig von der Wahl des Aufbaumaterials reduziert ist.

Die Lösung der Aufgabe erfolgt erfindungsgemäß mit den Merkmalen der unabhängigen Ansprüche.

Eine erfindungsgemäße Vorrichtung zum Aufbau dreidimensionaler Objekte mittels mindestens eines Aufbausmaterials umfasst einen Prozessraum mit mindestens einem, innerhalb des Prozessraums mit Hilfe einer Antriebseinheit in mindestens einer Richtung verfahrbaren Funktionselement zum Steuern eines Aufbauprozesses, wobei die Antriebseinheit mindestens ein Führungselement und mindestens ein funktional mit dem Führungselement verbundenes und relativ zu diesem bewegliches Antriebselement umfasst. Das Antriebselement kann dabei ein sich selbst antreibendes Element (z.B. ein Motor) oder ein über einen Motor oder ein anderes Antriebselement (z.B. einen Riemen, ein Zahnrad etc.) angetriebenes Element sein. Vorzugsweise stehen das mindestens eine Führungselement und das mindestens eine Antriebselement direkt miteinander in Kontakt, beispielsweise indem das Führungselement eine fest angeordnete Stange und das Antriebselement ein durch die Stange geführtes Antriebselement ist (z.B. ein Motor oder ein auf einer Stange geführter, angetriebener Schlitten). Dabei sind das mindestens eine Führungselement und das mindestens eine Antriebselement in mindestens einem, durch mindestens ein Separationselement von dem Prozessraum räumlich abgegrenzten Antriebsraum angeordnet. Das Separationselement kann insbesondere in Form eines Gehäuses ausgebildet sein, das die Antriebseinheit vollständig oder teilweise kapselt. Als Funktionselemente werden insbesondere Druckköpfe verstanden, aber auch sonstige, bei Vorrichtungen zum Aufbau dreidimensionaler Objekte typischerweise zum Einsatz kommende Funktionselemente, die dem Bereitstellen oder Bearbeiten von Aufbaumaterial dienen, beispielsweise Dosiereinheiten, Dissolver, Dispenser, Lasereinheiten, Vorrichtungen zur Abgabe von Licht, UV-Lampen, IR-Strahler oder sonstige Wärmequellen. Als Funktionselemente werden insbesondere auch Stempel eines Vorratsbehälters und eines Bauraumes verstanden, die während eines Aufbauprozesses - insbesondere schrittweise - nach oben (Stempel des Vorratsbehälters) bzw. nach unten (Stempel des Bauraumes) gefahren werden. Antriebseinheiten solcher Funktionselemente umfassen häufig Schrittmotoren und damit verbundene Spindeltriebe.

Unter dem Begriff Prozessraum wird vorliegend insbesondere der Raum verstanden, in welchem sich ein Aufbaumaterial, insbesondere Partikel und/oder Pulver, von der Entnahme aus einem Vorratsbehälter bis zur gewollten Zuführung zu einem Überschussbehälter bzw. zur Verwendung bei der Erstellung des dreidimensionalen Objekts frei bewegen kann. Es handelt sich hierbei üblicherweise um einen Bereich, der von unten durch eine Platte und von oben durch einen Deckel begrenzt ist und der sich in horizontaler Richtung über einen Vorratsbehälter, einen Bauraum und einen optionalen Überschussbehälter erstreckt. Unter "räumlich abgegrenzt" wird im vorliegenden Fall verstanden, dass allenfalls kleine Spalte zwischen dem Antriebsraum und dem Prozessraum vorhanden sind. Unter kleinen Spalten werden insbesondere Spalte verstanden, deren maximale Weite 5 mm nicht überschreitet. Vorzugsweise ist die maximale Spaltweite kleiner als 3 mm, besonders bevorzugt kleiner als 2 mm und weiter bevorzugt kleiner als 1 mm. Durch die räumliche Abgrenzung des Antriebsraums von dem Prozessraum wird einem Eindringen von Partikeln, insbesondere Pulverkörnern aus hartem, wie z.B. keramischen Material, entgegengewirkt und ein Verschleiß in der Antriebseinheit weitgehend vermieden. Der Prozessraum ist dabei, insbesondere im Bereich der Spalte, mittels Dichtelementen staubdicht abgedichtet und/oder er ist mit Ausnahme schmaler Spalte von wenigen Millimetern, insbesondere weniger als 10 mm geschlossen und weist Zusatzmittel auf, die einem Eindringen von Partikeln in den Antriebsraum entgegenwirken. Weiter vorzugsweise sind alle Antriebsräume mit dem vorstehend erwähnten und nachfolgend noch konkretisierten Dichtkonzept gegenüber dem Prozessraum abgedichtet. Die erfindungsgemäße Vorrichtung ist damit insbesondere für die Verwendung mit Partikeln und/oder Pulver aus harten Werkstoffen, wie Oxiden, Siliciden, Nitriden und/oder Carbiden der Elemente Al, B, Bi, Ca, Ce, Cr, Cu, K, Fe, Ga, Ge, In, Li, Mg, Mn, Mo, Na, Si, Sn, Sr, Ta, Ti, W, Y und/oder Zr oder Mischungen daraus verwendbar. Umfasst sind insoweit auch Mischoxide, Mischnitride, Mischcarbide, Carbonitride, Oxinitride oder Oxicarbide der zuvor genannten Elemente. Das keramische Pulver bzw. die eingesetzten Partikel haben vorzugsweise eine Korngröße im Bereich von 0,1 bis 500 µm, insbesondere in einem Bereich von 1 bis 100 µm.

Es wird darauf hingewiesen, dass unter Lagerelementen und funktional damit verbundenen Antriebselementen insbesondere folgende Elemente einer Antriebseinheit verstanden werden:
- als Lagerelemente dienende Führungsstangen, Rollenführungsschienen oder Profilführungsschienen mit darauf geführten Schlitten, Motoren, Linearmotoren oder sonstigen Antriebselementen und
- relativ zueinander bewegliche Elemente eines Spindeltriebes, ggf. einschließlich Antriebsmotor.

Bevorzugt sind Lagerelemente und Antriebselemente, die direkt verschiebbar, verdrehbar und oder auf sonstige Art und Weise so miteinander verbunden sind, dass die Relativbewegung zwischen diesen Elementen aufgrund der Art der Verbindung zumindest teilweise, vorzugsweise vollständig, vorgegeben ist. Bei vollständig vorgegebener Bewegung zwischen diesen Elementen haben die Elemente relativ zueinander nur einen Grad der Bewegungsfreiheit (translatorisch oder rotatorisch).

Die Anordnung wie vorstehend beschriebener Antriebseinheiten in einem separaten, vom Prozessraum räumlich abgegrenzten Antriebsraum, wie oben beschrieben, soll vom Schutz umfasst sein. Die räumliche Abgrenzung erfolgt vorzugsweise in einem separaten Gehäuse, wobei das Gehäuse weiter vorzugsweise formstabil ausgebildet ist. Nur beispielhaft wird diesbezüglich auf Gehäuse aus gebogenem Blech, aus glasfaserverstärktem Kunststoff (GFK) oder aus einem gießfähigen Material (insbesondere aus Metall oder Kunststoff) verwiesen. Als räumliche Abgrenzung kommen, insbesondere für die vorstehend genannten Stempel, auch nach Art eines Teleskoprohres gestaltete Gehäuse in Betracht, die der Lageänderung und der damit verbundenen Längenänderung einzelner Elemente Rechnung trägt.

In einer weiteren praktischen Ausführungsform einer erfindungsgemäßen Vorrichtung ist das mindestens eine Separationselement mit dem Antriebselement oder mit einem fest mit dem Antriebselement verbundenen Element verbunden. Vorzugsweise ist das Separationselement beidseitig auf zur Bewegungsrichtung des Antriebselements weisenden Seiten verbunden, oder es sind mehrere Separationselemente auf allen in Bewegungsrichtung weisenden Seiten angeordnet. In diesem Fall wird das Separationselement bzw. werden die Separationselemente mit dem Antriebselement mitbewegt und stellen so eine wirksame Abgrenzung des Antriebsraums von dem Prozessraum auch während der Bewegung des Antriebselements sicher.

In einer weiteren praktischen Ausführungsform einer erfindungsgemäßen Vorrichtung sind das mindestens eine Führungselement und das mindestens eine Antriebselement - und optional auch ein Antriebselement - in einem Antriebsgehäuse angeordnet, das mindestens einseitig von mindestens einem, beweglich gelagerten Separationselement verschlossen ist. Bei dem Antriebsgehäuse handelt es sich vorzugsweise um ein formstabiles und weiter vorzugsweise gehäusefest in der erfindungsgemäßen Vorrichtung festgelegtes Bauteil mit einer Öffnung, in welcher sich das Separationselement bewegt bzw. die Separationselemente zur (örtlich variablen) vollständigen Abdichtung des Antriebsraumes bewegen. In diesem Fall sind die Antriebselemente soweit möglich von dem Gehäuse gekapselt und im Bereich beweglich gelagerter Antriebselemente, insbesondere in einem an den Prozessraum angrenzenden Bereich, mittels eines ebenfalls beweglich gelagerten Separationselements abgedichtet. Es ist bevorzugt, wenn nur eine Seite des Gehäuses eine Öffnung und ein beweglich gelagertes Separationselement umfasst und die anderen Gehäuseseiten formstabile und nicht bewegliche, vorzugsweise gehäusefeste Elemente sind. Dies kann beispielsweise ein ein- oder mehrteiliges Gehäuse sein. Wenn nur eine Seite des Gehäuses von einem beweglich gelagerten Separationselement verschlossen ist, wird das Risiko, dass Partikel von dem Prozessraum in den Antriebsraum eindringen, reduziert, da nur im Bereich zwischen dem Separationselement bzw. den Separationselement und dem Gehäuse zusätzliche eine Abdichtung des Antriebsraumes erforderlich ist. Dabei wurde die Annahme getroffen, dass das Gehäuse selbst und das Separationselement selbst dicht gegenüber den prozessrelevanten Partikeln (z.B. keramisches Pulver) sind und ein Durchdringen dieser Partikel nicht zulassen.

In einer weiteren praktischen Ausführungsform einer erfindungsgemäßen Vorrichtung umfasst das Separationselement einen Rollladen, eine Jalousie, einen Faltenbalg und/oder einen Lamellenvorhang. Besonders bevorzugt sind Separationselemente, die eine hohe Eigensteifigkeit aufweisen und eine möglichst geringe Blocklänge erfordern. Ferner soll das Gewicht der Separationselemente möglichst gering sein.

In Versuchen wurde festgestellt, dass insbesondere in Bezug auf Festigkeit und Gewicht Rollläden als Separationselemente besonders geeignet sind. Dies gilt insbesondere für Rollläden, die als Sandwichstruktur aus einem Leichtbauwerkstoff gefertigt sind. Darunter sind sämtliche Strukturen zu verstehen, die aus mindestens mehreren Lagen in der bekannten Sandwichbauweise gefertigt sind. Auf diese Art und Weise können Separationselemente mit relativ geringem Gewicht und hoher Biege- und Beulsteifigkeit erzeugt werden. Das Flächengewicht einer wie vorstehend beschriebenen Sandwichstruktur, insbesondere einer aus eine Wabenstruktur und beidseitig jeweils eines in Harz getränkten Fasergewebes und/oder Fasergeleges beträgt vorzugsweise 65 g/m²-1200 g/m², bevorzugt 105 g/m²-450 g/m² und besonders bevorzugt 150 g/m²-270 g/m².

Als besonders geeignet hat sich ein Aufbau gezeigt, bei welchem eine Wabenstruktur beidseitig von mindestens einem in Harz getränkten Fasergewebe bzw. Fasergelege, insbesondere ein Glasfasergewebe bzw. Glasfasergelege, umgeben ist. Die Verwendung von Fasergeweben und/oder Fasergelegen ist besonders geeignet, wenn der Rollladen in Längsrichtung auf Zug und/oder Druck und in Querrichtung auf Biegung beansprucht wird. Eine Wabenstruktur kann dabei beispielsweise aus einem Aramidfaserwerkstoff erzeugt werden. Das Flächengewicht eines besonders geeigneten Glasfasergewebes bzw. Glasfasergeleges (ohne Harzanteil) beträgt 30-500 g/m², bevorzugt 50-200 g/m² und besonders bevorzugt 70-130 g/m². Als Harz besonders geeignet ist Epoxidharz, da es eine hohe Beständigkeit aufweist und eine hohe Langlebigkeit des Rollladens oder sonstigen Separationselements zur Folge hat.

Bei dem vorstehend beschriebenen Aufbau mit zwei beidseitig einer Wabenstruktur angeordneten Fasergeweben und/oder -gelegen ist es besonders vorteilhaft, wenn mindestens ein Fasergewebe und/oder Fasergelege in regelmäßigen Abständen parallel zueinander angeordnete Vertiefungen aufweist. Solche Vertiefungen können insbesondere über ein spanabhebendes Verfahren, wie z.B. Fräsen, bei bzw. nach der Herstellung der Sandwichstruktur erzeugt werden. Die Vertiefungen sind in diesem Fall auch einseitig in dem ausgehärteten Harzmaterial ausgebildet. Die Ausbildung entsprechender Vertiefungen hat den Vorteil, dass sich das Separationselement in Richtung der Seite, auf welcher die Vertiefungen angeordnet sind, um eine parallel zu den Vertiefungen angeordnete Achse besonders gut biegen oder sogar aufrollen lässt. Dies ist insbesondere dann von Vorteil, wenn das Separationselement bogenförmig in Schienen geführt oder aufgerollt werden soll.

In einer weiteren praktischen Ausführungsform einer erfindungsgemäßen Vorrichtung ist das Separationselement an mindestens einem Ende abgekantet. Durch eine derartige Abkantung kann die Befestigung eines Separationselements an einem Funktionselement oder einem fest mit dem Funktionselement verbundenen Element auf einfache Art und Weise realisiert werden. Ferner kann es vorteilhaft sein, ein Separationselement an einer abgekanteten Seite mit einem anderen Element, insbesondere einem Funktionselement, einem Führungselement oder einem Antriebselement, zu verbinden, insbesondere wenn eine Schraubverbindung verwendet wird und das Lösen einer Schraube nach längerer Betriebszeit bei einer solchen Befestigung keine oder weniger Schäden verursacht. Diesbezüglich wird insbesondere auf die Möglichkeit verwiesen, ein oder mehrere abgekantete Separationselemente seitlich so mit einem Funktionselement, einem Führungselement oder einem Antriebselement so mittels eines Verbindungsmittels zu verbinden, dass sich beim Lösen des Verbindungsmittels zwar die Verbindung löst, aber das Verbindungsmittel aufgrund der Abkantung auf dem Separationselement verbleibt und nicht in den Prozessraum gelangt. Das Abkanten kann, wenn ein Separationselement wie vorstehend beschrieben mit mindestens einem Fasergewebe und/oder Fasergelege ausgebildet ist, auf einfache Art und Weise dadurch erfolgen, dass eine Vertiefung in das Fasergewebe und/oder Fasergelege eingebracht wird, das Fasergewebe und/oder Fasergelege in Richtung der Vertiefung umgeklappt und in dieser Position fixiert wird. Die Fixierung kann insbesondere mit Hilfe eines Klebstoffes oder eines sonstigen Fixiermittels erfolgen.

Die erfindungsgemäße Vorrichtung lässt sich auch und insbesondere dann gut und unkompliziert umsetzen, wenn zwei Antriebsräume mit jeweils parallel zueinander verlaufenden, voneinander beabstandeten Führungsachsen vorgesehen sind. Dies ist bei allen aus dem Stand der Technik bekannten Vorrichtungen zum Aufbau dreidimensionaler Objekte der Fall, bei denen ein Druckkopfschlitten oder ein sonstiges Funktionselement in einer Längsrichtung und einer senkrecht zur Längsrichtung verlaufenden Querrichtung verfahrbar angeordnet ist. Die Erfindung ist auch unabhängig davon realisierbar, ob beidseitig oder nur einseitig eines Funktionselements ein Führungselement (insbesondere eine fest angeordnete Achse) und/oder ein Antriebselement angeordnet ist. Auch die Art des Antriebs ist für die Realisierung einer erfindungsgemäßen Vorrichtung irrelevant. Der Antrieb kann direkt an einer Antriebsachse über einen Linearmotor, über einen Riementrieb oder auf sonstige Art und Weise erfolgen. Viele aus dem Stand der Technik bekannte Vorrichtungen umfassen zumindest in einer Achsrichtung beidseitig des Arbeitsraumes jeweils mindestens eine Führungsachse.

Die Abgrenzung des Antriebsraums von dem Prozessraum ist besonders effizient, wenn Mittel zur Erzeugung einer gasförmigen Fluidströmung aus dem mindestens einen Antriebsraum in den Prozessraum vorgesehen sind. Wenn mehrere Antriebsräume existieren, sind diese vorzugsweise über Kanäle, Überströmöffnungen oder sonstige Elemente zu einem gemeinsamen, unter Druck stehenden Antriebsraum miteinander verbunden. In diesem Fall kann die Anzahl der erforderlichen Mittel zur Erzeugung der gasförmigen Fluidströmung reduziert werden. Die Beaufschlagung des Antriebsraumes bzw. der Antriebsräume kann bedarfsweise oder kontinuierlich, zumindest während des Aufbauprozesses bzw. solange es potentiell zu einem Eindringen von Partikeln in den Bauraum kommen kann, erfolgen. Unter den vorstehend genannten Mitteln werden insbesondere Ventilatoren und sonstige Vorrichtungen verstanden, die geeignet sind, einen Überdruck und einen dadurch hervorgerufenen Fluidstrom, insbesondere einen Luftstrom, zu erzeugen. Dazu muss eine Druckdifferenz zwischen dem Antriebsraum und dem Prozessraum erzeugt werden. Dies kann insbesondere durch Zuführen von Luft in den Antriebsraum und/oder alternativ oder in Ergänzung durch Erzeugung eines Unterdrucks im Bereich des Prozessraums erfolgen. Wichtig für den Aspekt der "Dichtheit" dabei ist, dass alle zwischen Prozessraum und Antriebsraum existierenden Spalten, die Überströmkanäle von dem Antriebsraum in den Arbeitsraum darstellen, von Fluid durchströmt werden. Es dürfen keine Überströmkanäle existieren, die ganz oder teilweise nicht vom Antriebsraum in Richtung Prozessraum durchströmt werden. Die Ventilatoren oder sonstigen Mittel sowie die Größe der Spalte sind hierauf abzustimmen.

Mit dem vorstehend erläuterten Dichtkonzept lassen sich bereits erhebliche Vorteile hinsichtlich der Verwendung einer erfindungsgemäßen Vorrichtung zum Aufbau dreidimensionaler Objekte erzielen. Unabhängig von diesem Dichtkonzept, aber auch ergänzend hierzu ist es vorteilhaft, wenn bei einer Vorrichtung gemäß dem Oberbegriff des Anspruchs 1 das Funktionselement zum Steuern eines Aufbauprozesses und die Antriebseinheit Teile einer ersten Funktionseinheit der Vorrichtung sind und ein Vorratsbehälter für das Aufbaumaterial und der untere Bereich des Prozessraums einschließlich Bauraum Teile einer zweiten Funktionseinheit sind, wobei die erste Funktionseinheit und die zweite Funktionseinheit lösbar miteinander verbunden sind. In diesem Fall lassen sich sämtliche Tätigkeiten, die mit dem "Handling" des Aufbausmaterials in Verbindung stehen, einfach und ohne großen Aufwand räumlich entfernt von der ersten Funktionseinheit mit dem ersten Funktionselement zum Steuern des Aufbauprozesses und der damit verbundenen, mindestens einen Antriebseinheit durchführen. Mit dem "Handling" des Aufbaumaterials sind insbesondere die Befüllung des Vorratsbehälters sowie die Entnahme eines mit der Vorrichtung erzeugten dreidimensionalen Gegenstandes aus dem Bauraum gemeint. Bei diesen Tätigkeiten ist die Gefahr, dass nicht verfestigtes Pulver oder sonstige Partikel sich frei im Prozessraum bewegen und dadurch verschleißerhöhend in den Bereich von Führungselementen und Antriebselementen gerät, besonders groß.

In einer weiteren praktischen Ausführungsform einer erfindungsgemäßen Vorrichtung umfasst die zweite Funktionseinheit zusätzlich einen Überschussbehälter zur Aufnahme von überschüssigem Aufbaumaterial. Es ist vorteilhaft, wenn auch der Überschussbehälter Teil der zweiten Funktionseinheit ist und somit auch die Entnahme und Rückführung überschüssigen Aufbaumaterials zum Vorratsbehälter entfernt von der ersten Funktionseinheit und somit von den Führungselementen und Antriebselementen durchgeführt wird.

Da erfindungsgemäße Vorrichtungen zum Aufbau dreidimensionaler Objekte regelmäßig einen relativ hohen Platzbedarf haben und ein nicht unerhebliches Gewicht aufweisen, ist es bevorzugt, wenn die erste Funktionseinheit und/oder die zweite Funktionseinheit fahrbar ausgebildet sind. Besonders bevorzugt ist es, wenn die zweite Funktionseinheit, welche auch den Bauraum und optional mindestens den unteren Teil eines Prozessraums umfasst, fahrbar ausgebildet ist. In diesem Fall kann ein dreidimensionales Objekt nach dessen Erstellung zusammen mit der zweiten Funktionseinheit von der ersten Funktionseinheit getrennt und in einen separaten Raum gefahren werden. In dem separaten Raum kann das erstellte dreidimensionale Objekt dann zusammen mit sich noch im Bauraum befindlichem Aufbaumaterial, insbesondere Pulver, aus der zweiten Funktionseinheit entnommen werden. Ferner können für einen folgenden Aufbauvorgang neues Pulver in den Vorratsbehälter eingefüllt und überschüssiges Aufbaumaterial aus dem Baurraum und optional aus dem Prozessraum oder Teilen des Prozessraums sowie aus einem etwaigen Überschussbehälter oder einem daran angeschlossenen Behälter entnommen werden.

In einer weiteren vorteilhaften Ausführungsform einer erfindungsgemäßen Vorrichtung umfassen die erste Funktionseinheit und die zweite Funktionseinheit Schnellkupplungselemente zur relativen Ausrichtung und Verbindung der ersten Funktionseinheit mit der zweiten Funktionseinheit. Unter Schnellkupplungselementen im Sinne der Erfindung sind insbesondere solche Elemente zu verstehen, die eine automatische Zentrierung und Verbindung der ersten Funktionseinheit zu der zweiten Funktionseinheit in möglichst kurzer Zeit mit nur wenigen Arbeitsschritten ermöglichen. Dazu können beispielsweise Führungsdorne an der ersten Funktionseinheit und korrespondierende Öffnungen an der zweiten Funktionseinheit ausgebildet sein. Darüber hinaus kann zusätzlich oder alternativ ein Mechanismus zum Anheben und/oder Ankuppeln der ersten Funktionseinheit an die zweite Funktionseinheit vorgesehen sein. Besonders bevorzugt ist es, wenn die Zentrierung und Verbindung der ersten Funktionseinheit an die zweite Funktionseinheit mit nur einem Arbeitsgang, beispielsweise durch Betätigung eines Fußhebels und unter Verwendung einer Zentriervorrichtung, erfolgen kann. Als Zentriervorrichtung kann beispielsweise eine erste Funktionseinheit sich verjüngende Aufnahme zur Vorzentrierung einer zweiten Funktionseinheit aufweisen, die so gestaltet ist, dass eine fahrbare zweite Funktionseinheit beim Einschieben in Querrichtung durch die Aufnahme und in Längsrichtung durch einen Anschlag vorpositioniert wird. Ferner kann eine Feinzentrierung durch konisch ausgebildete Öffnungen in der ersten Funktionseinheit beim Anheben der vorpositionierten, zweiten Funktionseinheit erfolgen.

Weitere praktische Ausführungsformen und Vorteile der Erfindung sind nachfolgend im Zusammenhang mit den Zeichnungen beschrieben. Es zeigen:
- Fig. 1 - 4: eine erfindungsgemäße Vorrichtung mit einer ersten Funktionseinheit und einer zweiten Funktionseinheit in perspektivischen Darstellungen (Fig. 1 und Fig. 2), in einer Seitenansicht (Fig. 3) und in einer Ansicht von vorne (Fig. 4),
- Fig. 5 - 8: die in den Figuren 1 - 4 gezeigte erfindungsgemäße Vorrichtung ohne das Oberteil und die Seitenverkleidungen der ersten Funktionseinheit in einer perspektivischen Darstellung (Fig. 5) in einer Ansicht von oben (Fig. 6), in einer Seitenansicht (Fig. 7) und in einer Ansicht von vorne (Fig. 8),
- Fig. 9 - 11: eine zweite Funktionseinheit einer erfindungsgemäßen Vorrichtung in einer perspektivischen Ansicht (Fig. 9), in einer Seitenansicht (Fig. 10) und in einer Ansicht von vorne (Fig. 11),
- Fig. 12 - 15: das Portal der ersten Funktionseinheit mit Deckel in einer perspektivischen Ansicht (Fig. 12), in einer Seitenansicht (Fig. 13), in einer Ansicht von vorne (Fig. 14) und in einer Ansicht von unten (Fig. 15),
- Fig. 16 - 18: das in den Figuren 12-15 gezeigte Portal ohne den Deckel in einer Seitenansicht (Fig. 16), in einer Ansicht von vorne (Fig. 17) und in einer perspektivischen Ansicht (Fig. 18),
- Fig. 19: einen Schnitt gemäß den Schnittlinien A - A durch den Prozessraum,
- Fig. 20: einen Schnitt gemäß den Linien C - C durch den Prozessraum,
- Fig. 21: einen Schnitt gemäß den Linien B - B durch den Prozessraum,
- Fig. 22 - 23: einen als Separationselement dienenden Rollladen in einer perspektivischen Darstellung (Fig. 22) und in einer Seitenansicht einschließlich einer Detaildarstellung (Fig. 23),
- Fig. 24: die in Figur 11 gezeigte zweite Funktionseinheit in einer Ansicht von vorne mit den verdeckten Stempeln des Vorratsbehälters und des Bauraumes und
- Fig. 25: die in dem Bauraum aus Fig. 24 angeordnete Antriebseinheit des Stempels des Bauraums in einer Schnittdarstellung gemäß den Linien F - F.

Die Erfindung wird nachfolgend anhand eines nicht beschränkenden Ausführungsbeispiels beschrieben.

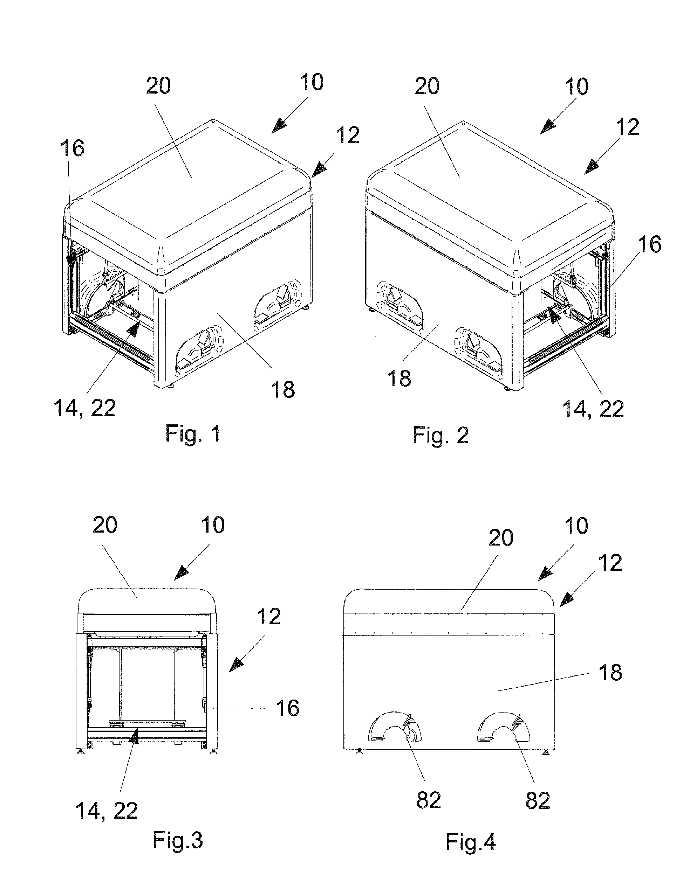

Die Figuren 1 bis 4 zeigen verschiedene Ansichten einer Vorrichtung 10 zum Aufbau dreidimensionaler Objekte. Die Vorrichtung 10 besteht im Wesentlichen aus einer ersten Funktionseinheit 12 und einer zweiten Funktionseinheit 14.

Bei der ersten Funktionseinheit 12 handelt es sich im Wesentlichen um ein Untergestell 16 mit daran befestigten Seitenwänden 18 und einem als Deckel ausgebildeten Oberteil 20. Weitere Elemente der ersten Funktionseinheit 12 werden nachfolgend noch in Verbindung mit anderen Figuren beschrieben.

Bei der zweiten Funktionseinheit 14 handelt es sich im Wesentlichen um einen fahrbaren Wagen 22, der in den Figuren 1 bis 4 fest mit der ersten Funktionseinheit 12 verbunden ist.

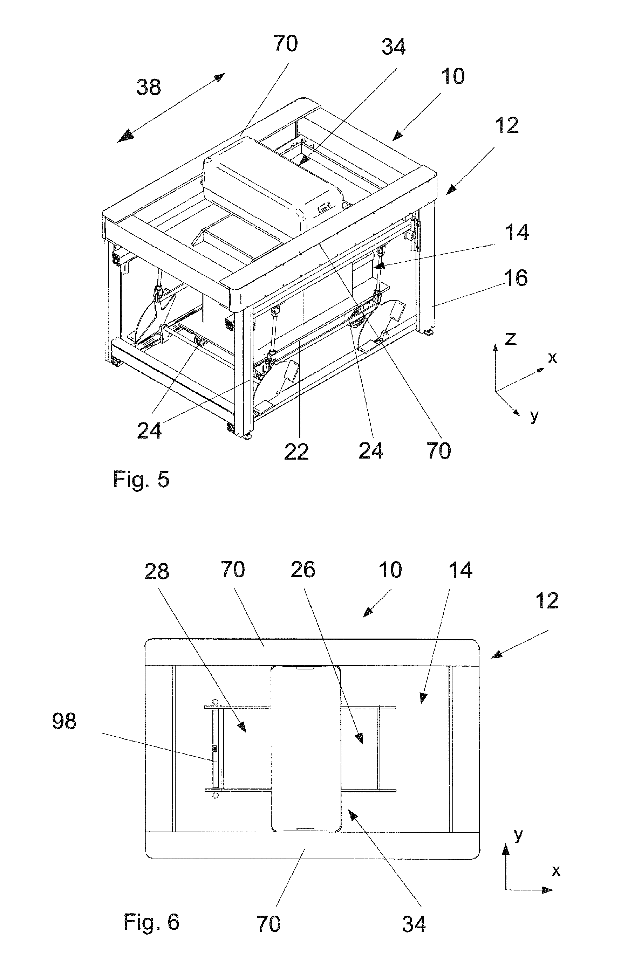

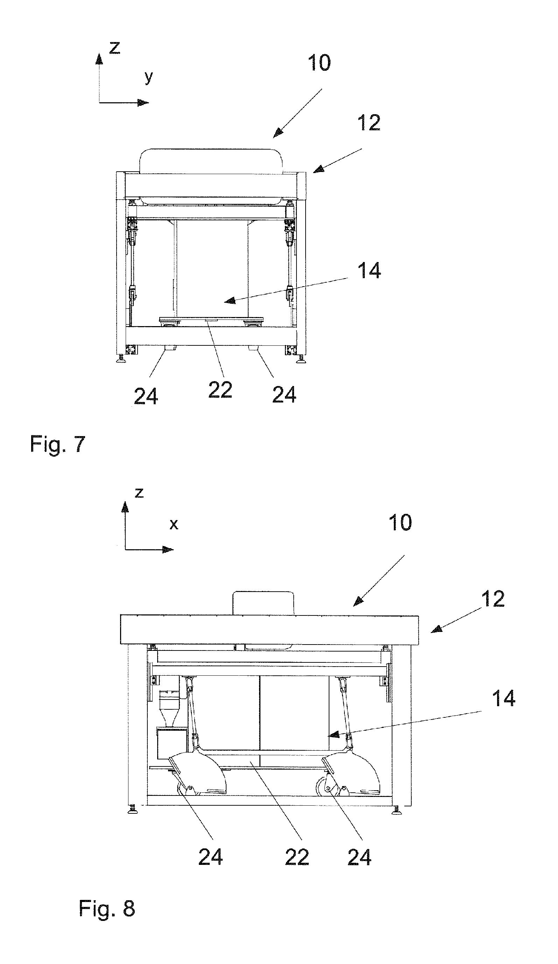

Weitere Details zu der Verbindungstechnik zwischen der ersten Funktionseinheit 12 und der zweiten Funktionseinheit 14 gehen aus den Figuren 5 bis 8 und der nachfolgenden Figurenbeschreibung hervor.

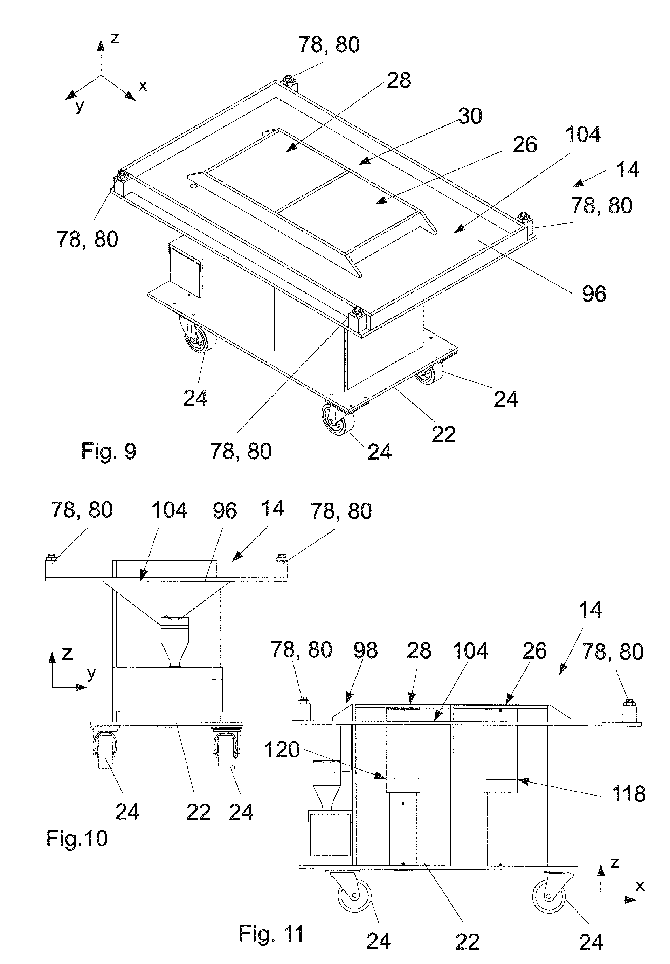

Die zweite Funktionseinheit 14 ist in den Figuren 9 bis 11 separat dargestellt. Wie in den Figuren 9 bis 11 zu erkennen ist, ist die zweite Funktionseinheit 14 fahrbar ausgebildet. Dazu sind an dem Wagen 22 vier Räder 24 vorgesehen. Der Wagen 22 umfasst ferner einen Vorratsbehälter 26, der vor einem Aufbauvorgang mit einem Aufbaumaterial, insbesondere mit einem nicht dargestellten Pulver oder sonstigen Partikeln, befüllt wird.

Ferner umfasst der Wagen 22 einen Bauraum 28, welcher sich unterhalb eines Prozessraumes 30 anschließt und in welche ein aufzubauendes dreidimensionales Objekt beim Aufbauvorgang Ebene-für-Ebene aufgenommen wird. Als Prozessraum 30 wird vorliegend der gesamte Bereich oberhalb der als Prozessebene 104 dienenden Platte 96 bezeichnet, in welchem sich bei bestimmungsgemäßer Verwendung der Vorrichtung 10 Pulver befinden kann, welches sich bei Einwirkung äußerer Kräfte, wie z.B. Einwirkung einer Walze, Luftströmungen etc., frei bewegen kann.

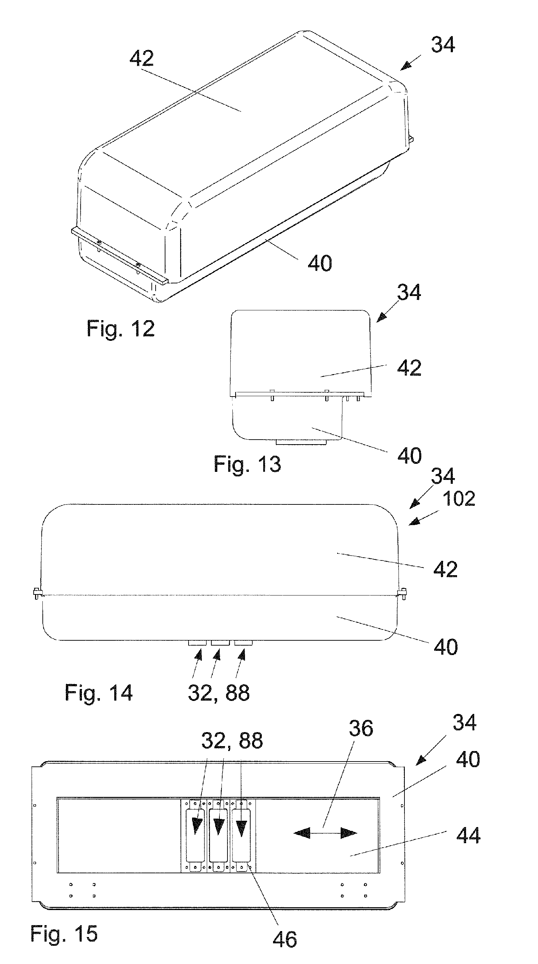

Zum Aufbau eines dreidimensionalen Objekts wird in bekannter Art und Weise jeweils eine dünne Pulverlage (Dicke meist 10 µm bis 200 µm) aus dem Vorratsbehälter 26 in den Bauraum 28 des Prozessraums 30 befördert, beispielsweise mittels eines Rakels und ggf. unter anschließender Verdichtung des Materials mittels einer Walze. Durch anschließende Zugabe eines Bindemittels über in der ersten Funktionseinheit 12 angeordnete Druckköpfe 32 (vgl. Fig. 14 und 15) wird anschließend in bekannter Art und Weise eine Aushärtung diskreter Bereiche in der Pulverschicht bewirkt. Die Druckköpfe 32 sind in der gezeigten Ausführungsform Funktionselemente 88 im Sinne der Erfindung. Überschüssiges Pulver kann beispielsweise über eine Absaugöffnung 98, die in der gezeigten Ausführungsform neben dem Bauraum 28 angeordnet ist, abgesaugt werden.

Die Druckköpfe 32 sind innerhalb eines Portals 34, das in den Figuren 12 bis 15 im Detail dargestellt ist, linear in Richtung des Doppelpfeils 36 verfahrbar angeordnet. Dazu sind diese in einem Druckschlitten 46 festgelegt. Die Richtung des Doppelpfeils 36 entspricht der Querrichtung der erfindungsgemäßen Vorrichtung 10. Das Portal 34 selbst ist als Ganzes innerhalb der erfindungsgemäßen Vorrichtung 10 in deren Längsrichtung (x-Richtung der Vorrichtung) gemäß dem Doppelpfeil 38 verfahrbar gelagert (vgl. Fig. 5). Dadurch lässt sich der Druckkopf 32 in eine beliebige Position (in der x-y-Ebene) innerhalb des Prozessraumes 30, insbesondere über dem Bauraum 28, verfahren.

Wie in den Figuren 12 bis 14 zu erkennen ist, umfasst das Portal 34 ein Gehäuseunterteil 40 und einen Gehäusedeckel 42, die miteinander verschraubt sind und zusammen ein Antriebsgehäuse 102 bilden. Wie aus Figur 15 ersichtlich ist, weist die Unterseite des Gehäuseunterteils 40 einen Ausschnitt 44 auf. Innerhalb dieses Ausschnitts 44 kann sich der Druckkopf 32 mitsamt dem Druckschlitten 46, der zur Aufnahme des Druckkopfes 32 dient, in Richtung des Doppelpfeils 36 (y-Richtung der Vorrichtung) bewegen.

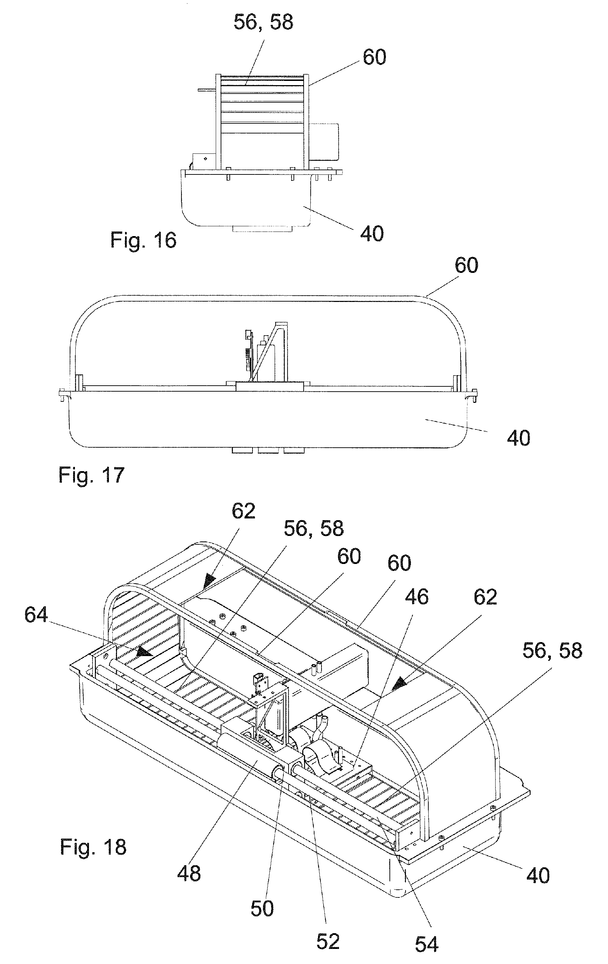

Wie in den Figuren 16 bis 18 erkennbar ist, erfolgt der Antrieb des Druckschlittens 46 mit dem Druckkopf 32 über einen Linearmotor 48, der fest mit einem Antriebselement 50 (hier ein Schlitten, der mit dem Druckschlitten 46 verbunden oder einstückig mit diesem ausgebildet ist) verbunden ist. Sowohl der Linearmotor 48 als auch das Antriebselement 50 sind auf parallel zueinander verlaufenden Führungselementen 52, 54 (hier: zylindrische Stangen) verschiebbar gelagert.

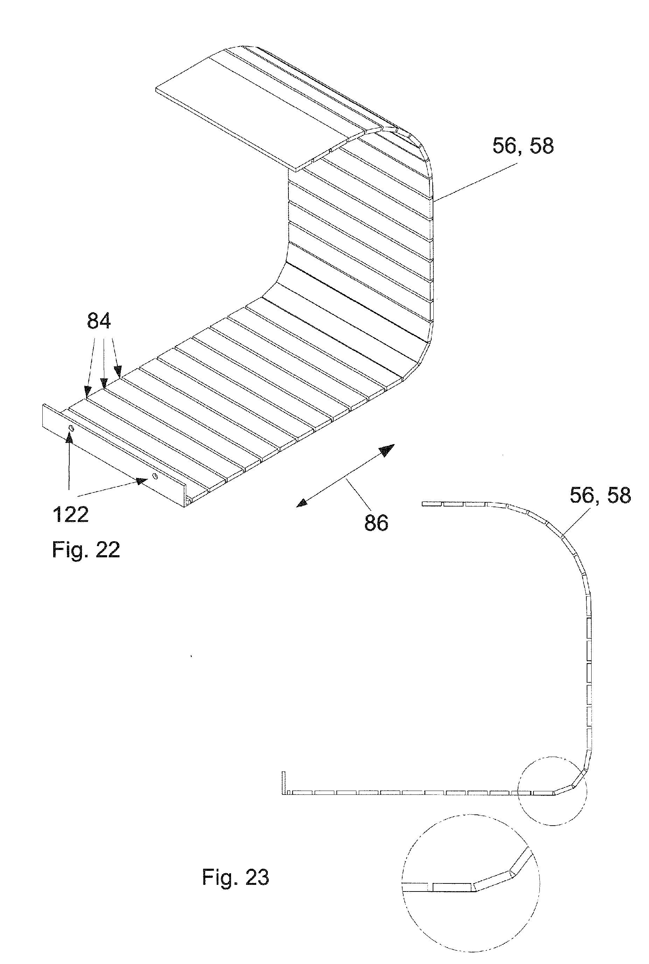

Wie in Figur 18 erkennbar ist, ist der Druckschlitten 46 in seiner Bewegungsrichtung jeweils mit einem Separationselement 56 verbunden. Bei den Separationselementen 56 handelt es sich um Rollläden 58, die nachfolgend in Verbindung mit den Figuren 22 und 23 noch im Detail beschrieben werden. Die Rollläden 58 sind in seitlichen Führungsschienen 60 geführt. Wie in Figur 18 erkennbar ist, ist zwischen den oberseitigen Enden 62 der Rollläden 58 ein Freiraum. Die Länge dieses Freiraums bleibt bei Bewegung des Druckschlittens 46 konstant, da sich die Rollläden 58 stets zusammen mit dem Druckschlitten 46 in die gleiche Richtung bewegen. Die Rollläden 58 dienen ausschließlich der Abdeckung des Zwischenraumes zwischen dem Druckschlitten 46 und dem Gehäuseunterteil 40 im Bereich des Ausschnitts 44.

Der durch das Gehäuseunterteil 40, den Gehäusedeckel 42 und die Rollläden 58 begrenzte Raum wird als Antriebsraum 64 bezeichnet. In diesem Antriebsraum 64 befinden sich die Führungselemente 52, 54 und das Antriebselement 50 sowie der als weiteres Antriebselement dienende Linearmotor 48.

In der gezeigten Ausführungsform wird über eine nicht im Detail dargestellte Fluidführung ein gasförmiges Fluid, vorzugsweise Luft, in den Antriebsraum 64 eingeführt. Die Menge der Luft ist so gewählt, dass sich ein Luftdruck einstellt, der ausreichend ist, damit aus allen verbleibenden Spalten zwischen dem Antriebsraum 64 und dem Prozessraum 30 gleichzeitig Luft ausströmt. Dadurch wird wirksam verhindert, dass Partikel aus dem Prozessraum 30 in den Antriebsraum 64 eindringen können.

Analog zu der vorstehend beschriebenen Abdichtung des Antriebsraums 64 in dem Portal 34 sind in dem Untergestell 16 in Längsrichtung zwei weitere Antriebsräume 90 mit als Separationselemente 66 dienenden Rollläden 68 gegenüber dem Prozessraum 30 abgedichtet. Da diese Antriebsräume 90 spiegelsymmetrisch aufgebaut sind, wurden für die jeweiligen Elemente die gleichen Bezugszeichen verwendet.

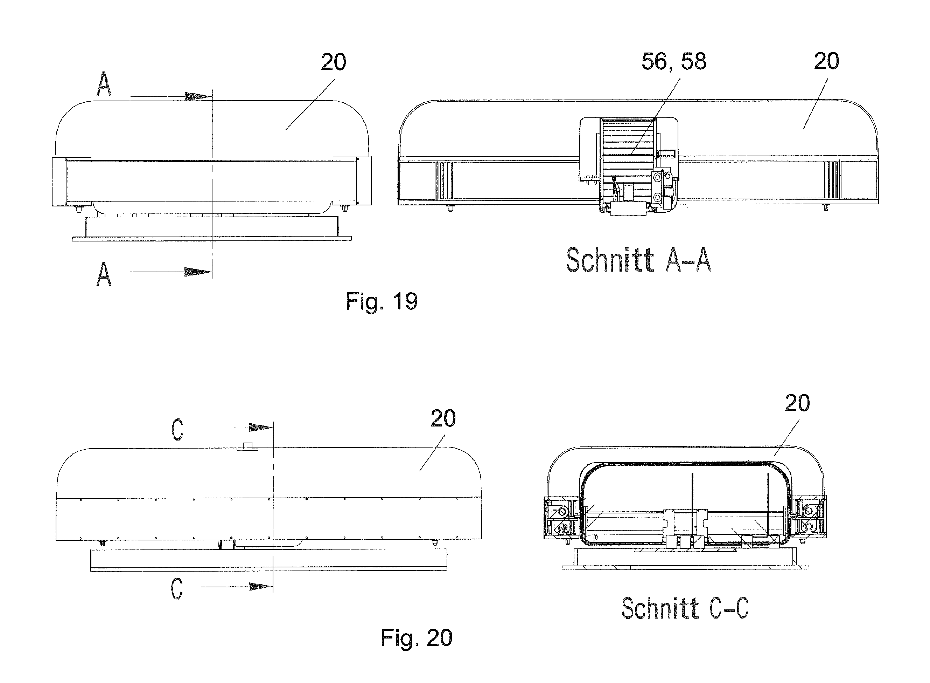

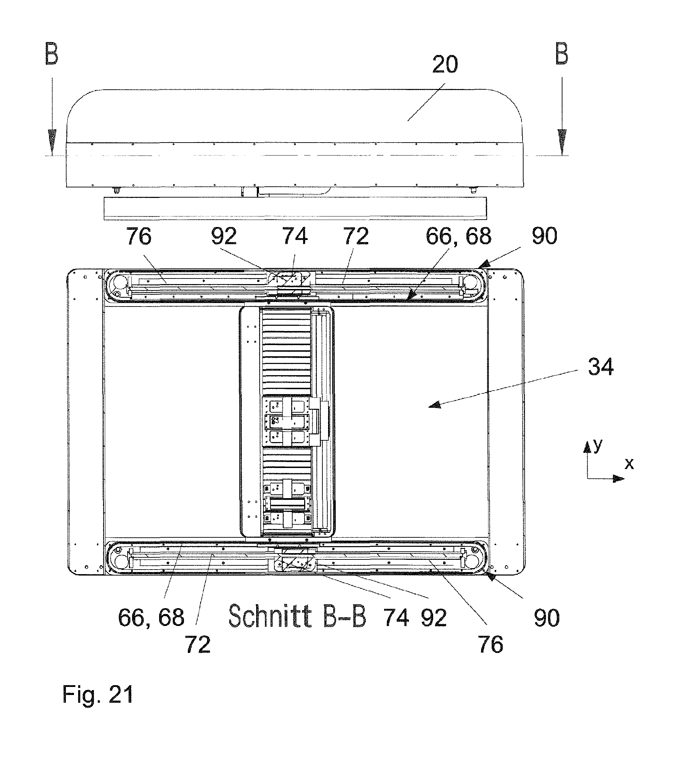

Wie aus den Figuren 19 bis 21 hervorgeht, sind die Antriebsräume 90 im Bereich der oberen Längsträger 70 des Untergestells 16 angeordnet (vgl. auch Fig. 5 und 6). Im Bereich der Antriebsräume 64 befindet sich ebenfalls jeweils ein Führungselement 72 für ein Antriebselement 74 und ein Führungselement 76 für einen als Antriebselement dienenden Linearmotor 92. Bei den Antriebselementen 74 handelt es sich um als Schlitten ausgebildete Elemente, die in Querrichtung der Vorrichtung 10 mit dem Portal 34 verbunden sind. Die Führungselemente 72, 76, das Antriebselement 74 und der Linearmotor 92 sind jeweils in einem Gehäuse angeordnet, das zum Prozessraum 30 hin an seiner vertikalen Fläche jeweils eine nicht im Detail dargestellte Öffnung aufweist. Diese Öffnungen werden analog zu der in dem Portal 34 ausgebildeten Öffnung 44 durch die als Separationselemente 66 dienenden Rollläden 68 verschlossen. Dazu sind die Rollläden 68 fest mit dem als Schlitten ausgebildeten Antriebselement 74 verbunden und bewegen sich in gleicher Art und Weise wie das Antriebselement 74.

Wie vorstehend bereits beschrieben, wird auch in die Antriebsräume 64 wiederum ein gasförmiges Fluid, vorzugsweise Luft, eingebracht, so dass sich ein Überdruck in den Längsträgern 70 ausbildet und ein Luftstrom von dem Antriebsraum 64 in den Prozessraum 30 durch sämtliche verbleibende Spalten erfolgt. Vorzugsweise sind hierzu im Bereich der Längsträger 70 der Vorrichtung 10 Ventilatoren oder sonstige geeignete Vorrichtungen angeordnet, welche Luft in die Antriebsräume 64 fördern. Diese wird aus den Antriebsräumen 64 unmittelbar durch die Antriebselemente 74 in den Arbeitsraum 64 des Portals 34 gefördert. Dazu ist in den Antriebselementen 74 ein nicht dargestellter Überströmkanal ausgebildet. Die nicht dargestellten Ventilatoren oder sonstigen Vorrichtungen sind so ausgelegt, dass in den Antriebsräumen 64 der Längsträger 70 und in dem Prozessraum 30 des Portals 34 ein zusammenhängender Druckraum entsteht, der gegenüber dem Prozessraum 30 einen Überdruck aufweist und somit einen kontinuierlichen Luftstrom von den Antriebsräumen 64 in den Prozessraum 30 bewirkt.

Wie in den Figuren 9 bis 11 zu erkennen ist, sind an der Oberseite der zweiten Funktionseinheit 14 als Schnellkupplungselemente 78 sich in senkrechter Richtung nach oben erstreckende Führungsdorne 80 ausgebildet. Diese Führungsdorne 80 dienen dazu, in korrespondierende Öffnungen an der Unterseite der ersten Funktionseinheit 12 einzugreifen, wenn die zweite Funktionseinheit 14 relativ zu der ersten Funktionseinheit 12 korrekt positioniert ist. Um eine Verbindung von der zweiten Funktionseinheit 14 zu der ersten Funktionseinheit 12 herzustellen, können die in Figur 4 erkennbaren Fußhebel 82 betätigt werden. In der gezeigten Ausführungsform handelt es sich bei den Fußhebeln 82 um sogenannte Kniestockhebel. Durch Betätigen der Fußhebel 82 wird die zweite Funktionseinheit 14 angehoben, bis diese mit der ersten Funktionseinheit 12 verrastet. Eine Verrastung ist nur möglich, wenn die Dorne 80 korrekt in den korrespondierenden Öffnungen der ersten Funktionseinheit 12 ausgerichtet sind.

In der gezeigten Ausführungsform ist ein Sicherheitsschalter vorgesehen, der in den Figuren nicht dargestellt ist. Mit diesem Sicherheitsschalter wird überwacht, ob die erste Funktionseinheit 12 korrekt mit der zweiten Funktionseinheit 14 verbunden ist. Ist dies der Fall, kann der Aufbauprozess stattfinden. Sofern eine Fehlpositionierung festgestellt wird, wird der Aufbauprozess sofort unterbrochen.

Zur Befestigung der ersten Funktionseinheit 14 an der zweiten Funktionseinheit 12 werden vorzugsweise ein oder mehrere Permanent-Elektro-Haftmagnete eingesetzt. Mit solchen Permanent-Elektro-Haftmagneten lassen sich Verbindungen mit hoher Haltekraft leicht herstellen und auch insbesondere wieder durch elektrische Signale oder einfache Schaltvorgänge lösen.

Ist ein Aufbauprozess abgeschlossen, kann durch Betätigung der Fußhebel 82 die zweite Funktionseinheit 14 von der ersten Funktionseinheit 12 getrennt werden. Der in Figur 9 dargestellte Wagen 22 kann dann zur Entnahme des Objekts und zur neuen Befüllung des Vorratsbehälters 26 sowie zur Entnahme des in den Bauraum 28 nicht verwendeten Pulvers in einen anderen Raum gefahren werden.

In den Figuren 22 und 23 ist exemplarisch der als Separationselement 56 dienende Rollladen 58 des Portals 34 als separates Element dargestellt. Wie zu erkennen ist, ist der Rollladen 58 an einem Ende um etwa 90° abgekantet. An dem abgekanteten Ende sind Öffnungen 122 zur Herstellung einer Schraubverbindung des Rollladens 58 zu dem Druckschlitten 46 (siehe Fig. 18) vorgesehen. Die Schrauben werden von der Seite des Rollladens 58 aus in den Druckschlitten 46 eingeschraubt. Aufgrund der Abkantung ist so sichergestellt, dass eine sich lösende Schraube auf dem Rollladen 58 und somit im Antriebsraum 64 liegenbleibt und nicht in den Prozessraum gelangt. Ferner ist zu erkennen, dass in dem Rollladen 58 auf der inneren Seite, d.h. auf der Seite, in welche der Rollladen 58 bei bestimmungsgemäßer Verwendung durch die in den Figuren 22 und 23 nicht dargestellten Führungsschienen gerollt wird, Vertiefungen 84 ausgebildet sind. Die Vertiefungen 84 sind quer zur Bewegungsrichtung, die mit dem Doppelpfeil 86 dargestellt ist, ausgebildet. Sie verlaufen in regelmäßigen Abständen parallel zueinander. Der in den Figuren 22 und 23 dargestellte Rollladen 58 ist als Sandwichstruktur ausgebildet. Er umfasst eine mittlere Wabenstruktur aus einem Aramidfaserwerkstoff und ist beidseitig umgeben von einem in Harz getränkten Fasergewebe und/oder Fasergelege, insbesondere umfassend Glasfasern. Die Tiefe der Vertiefung 84 entspricht in etwa der Dicke eines außenseitig aufgebrachten Glasfasergewebes und/oder Glasfasergeleges (nicht dargstellt).

Der vorstehend beschriebene Aufbau eines Rollladens 58 ist besonders vorteilhaft, da er bei relativ geringem Flächengewicht, insbesondere zwischen 150 g/m² und 270 g/m² eine sehr hohe Biege- und Beulsteifigkeit aufweist. Die hohe Biegeund Beulsteifigkeit hat den Vorteil, dass der Rollladen 58 dem durch den geringfügigen Überdruck in den Antriebsräumen 64 erzeugten Druck standhält, ohne dass es dadurch zu einer erkennbaren Verformung kommt. Das niedrige Flächengewicht hat den Vorteil, dass der Rollladen 58 sehr geringem Aufwand und geringer Reibung in Führungsschienen bewegt werden kann. Die Reibung in Führungsschienen ist weiter reduziert, wenn die Führungsschienen aus einem Werkstoff gefertigt sind, das Kohlenstoff bzw. Graphit enthält.

Vorzugsweise sind auch die Gehäuse einer erfindungsgemäßen Vorrichtung 10 aus Leichtbaumaterial hergestellt.

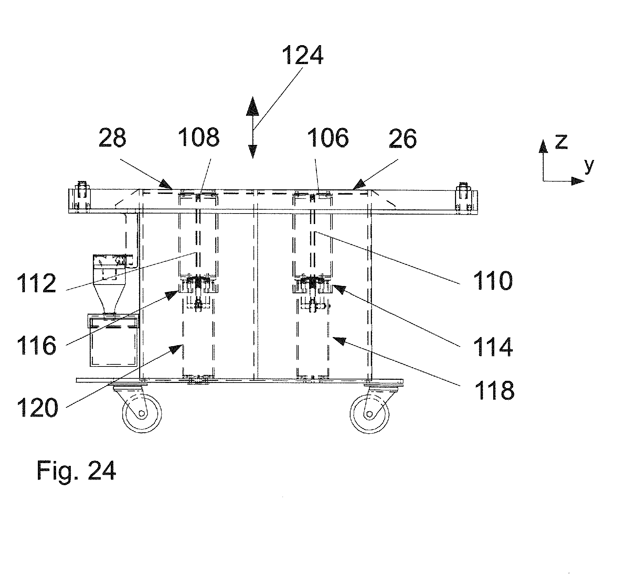

In Figur 24 ist die in Figur 11 dargestellte zweite Funktionseinheit 14 mit verdeckten Elementen dargestellt. Die verdeckten Elemente sind als gestrichelte Linien dargestellt. Wie zu erkennen ist, befinden sich in dem Vorratsbehälter 26 und in dem Bauraum 28 Stempel 106, 108. Diese Stempel sind über Gewindestangen 110, 112 und entsprechende Spindeltriebe 114, 116 in Hochrichtung (z-Richtung der Vorrichtung) gemäß dem Doppelpfeil 124 verfahrbar. Der Antrieb der Spindeltriebe 114, 116 kann insbesondere über Schrittmotoren erfolgen. In der gezeigten Ausführungsform sind die Spindeltriebe 114, 116 Antriebseinheiten im Sinne der Erfindung, denn die Spindeltriebe 114, 116 dienen dem Antrieb von Stempeln 106, 108, die wiederum Funktionselemente einer erfindungsgemäßen Vorrichtung 10 sind. Die Gewindestangen 110, 112 und die nicht im Detail gezeigten Spindelmuttern sind Führungselemente bzw. Antriebselemente im Sinne der Erfindung. Die in Figur 11 gezeigten Antriebseinheiten umfassen als zusätzliche Elemente nicht im Detail dargestellte Schrittmotoren. Die jeweiligen Antriebseinheiten sind in teleskopartig ausgebildeten Gehäusen 118, 120 angeordnet und somit vor dem Eindringen und dem Verschleiß durch abrasives Pulver und durch sonstige Partikel geschützt angeordnet.

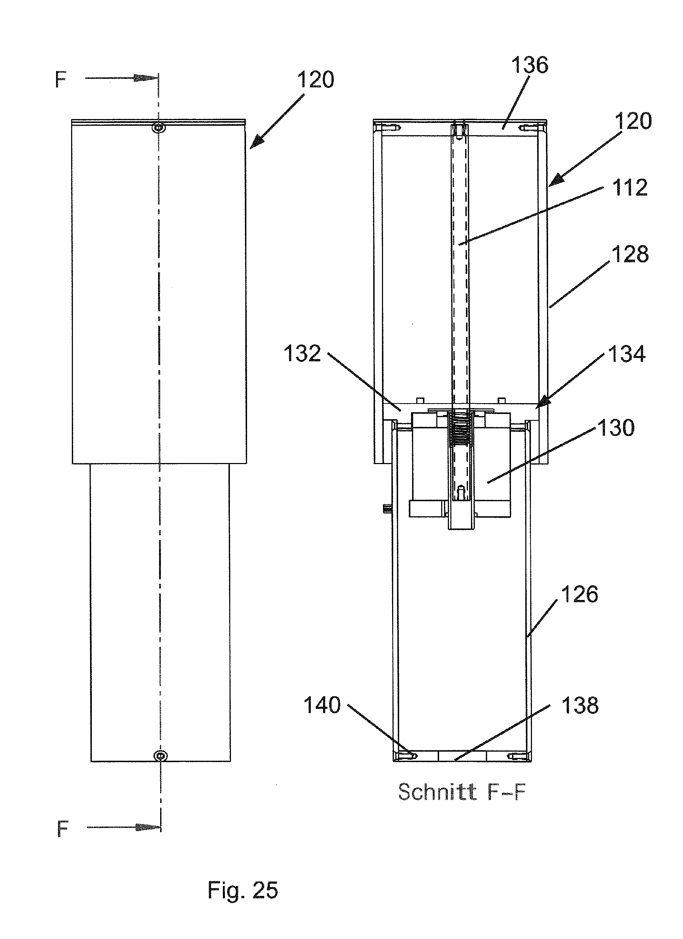

In Figur 25, die eine Schnittdarstellung durch die Antriebseinheit in dem Bauraum 28 aus Figur 24 zeigt, ist die mit dem Stempel 108 (in Figur 25 nicht dargestellt) verbundene Gewindestange 110 (Spindel) noch besser zu erkennen als in Figur 24. In Figur 25 ist auch erkennbar, dass das teleskopartig ausgebildete Gehäuse 120 aus einem Ständerrohr 126 und einem Mantelrohr 128 besteht, wobei der Außendurchmesser der Ständerrohrs 126 kleiner ist als der Innendurchmesser des Mantelrohres 128. Das Ständerrohr kann daher in das Mantelrohr 128 eintauchen. In Figur 25 ist auch der bereits erwähnte Motor mit Spindelmutter 130 schematisch dargestellt. Diese sind an einer Motor-Trägerplatte 132 befestigt, die seitlich gegenüber dem Ständerrohr 126 auskragt und nahezu an der Innenwand des Mantelrohres 128 anliegt. Zwischen der Innenwand des Mantelrohres 128 und den Außenseiten der Trägerplatte ist lediglich ein schmaler Dichtspalt 134 als Freiraum. Die Oberseite des Mantelrohres 128 ist mit einer Stempel-Trägerplatte 136 verschlossen, die fest mit dem Mantelrohr 128 verbunden (hier: verschraubt) ist. Oberhalb der Trägerplatte 136 wird der in Figur 25 nicht dargestellte Stempel 108 des Bauraums angebracht. An der Unterseite des Ständerrohres 126 ist in einer Ständer-Trägerplatte 140 eine Anschlussöffnung 138 für Mittel zur Beaufschlagung des Innenraums des teleskopartigen ausgebildeten Gehäuses 120 mit einem Fluid, insbesondere mit Luft. Wenn über diese Anschlussöffnung 138 Luft in das Gehäuse 120 eingebracht wird, bildet sich innerhalb des Gehäuses 120 ein Druckraum aus, wobei kontinuierlich Luft über den Dichtspalt 134 ausströmt, sofern der Dichtspalt die einzige Öffnung des Gehäuses 120 darstellt. Die Stempel-Trägerplatte 136 kann auch so ausgebildet sein, dass Luft zwischen Stempel-Trägerplatte 136 und der Innenwand des Mantelrohres 128 ausströmt. In diesem Fall muss aber sichergestellt sein, dass die entstehende Luftströmung den darüber angeordneten Stempel und das in diesem Bereich befindliche Aufbaumaterial nicht negativ beeinflusst. Bevorzugt ist es daher, die Verbindung zwischen Stempel-Trägerplatte 136 und Mantelrohr 128 (fluid-)dicht auszubilden.

Zwischen der Ständer-Trägerplatte 140 und der Innenwand des Ständerrohres 126 kann optional ebenfalls ein Dichtspalt (nicht dargestellt) ausgebildet sein. Vorzugsweise ist die Verbindung zwischen Ständer-Trägerplatte 140 und Ständerrohr 126 ebenfalls (fluid-)dicht ausgebildet.

Es versteht sich, dass das in Figur 24 erkennbare, teleskopartig ausgebildete Gehäuse 118 des Vorratsbehälters 26 in gleicher Art und Weise wie vorstehend beschrieben ausgebildet sein kann.

Das Prinzip der Erfindung, Antriebseinheiten, wie z.B. einen Spindeltrieb für einen Stempel oder eine andere Kombination aus einem Führungselement und einem Antriebselement einer Vorrichtung zum Aufbau eines dreidimensionalen Objektes, in räumlich abgegrenzte, spaltbehaftete Antriebsräumen anzuordnen und diese optional zusätzliche mit einem Fluid zu beaufschlagen, wurde insoweit auch bei den den Stempeln 106, 108 zugeordneten Antriebseinheiten (d.h. den Spindeltrieben) realisiert.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden. Nur beispielhaft wird diesbezüglich darauf verwiesen, dass Führungsdorne und Öffnungen, wie sie in Verbindung mit den Figuren 9-11 beschrieben und der ersten Funktionseinheit und der zweiten Funktionseinheit zugeordnet sind, auch umgekehrt zugeordnet sein können. In diesem Fall wären Führungsdorne an der ersten Funktionseinheit (z.B. einem Gestell) angeordnet und korrespondierende Öffnungen an der zweiten Funktionseinheit (z.B. einem in das Gestell einfahrbaren und mit diesem verbindbaren Wagen).

### Bezugszeichenliste

- 10: Vorrichtung
- 12: erste Funktionseinheit
- 14: zweite Funktionseinheit
- 16: Untergestell
- 18: Seitenwand
- 20: Oberteil (Deckel)
- 22: Wagen
- 24: Rad
- 26: Vorratsbehälter
- 28: Bauraum
- 30: Prozessraum
- 32: Druckkopf
- 34: Portal
- 36: Doppelpfeil
- 38: Doppelpfeil
- 40: Gehäuseunterteil
- 42: Gehäusedeckel
- 44: Ausschnitt
- 46: Druckschlitten
- 48: Linearmotor
- 50: Antriebselement
- 52: Führungselement
- 54: Führungselement
- 56: Separationselement
- 58: Rollladen
- 60: Führungsschiene
- 62: Ende
- 64: Antriebsraum
- 66: Separationselement
- 68: Rollladen
- 70: Längsträger
- 72: Führungselement
- 74: Antriebselement
- 76: Führungselement
- 78: Schnellkupplungselement
- 80: Führungsdorn
- 82: Fußhebel
- 84: Vertiefung
- 86: Doppelpfeil
- 88: Funktionselement
- 90: Antriebsraum
- 92: Linearmotor
- 96: Platte
- 98: Absaugöffnung
- 102: Antriebsgehäuse
- 104: Prozessebene
- 106: Stempel (des Vorratsbehälters)
- 108: Stempel (des Bauraumes)
- 110: Gewindestange (des Vorratsbehälters)
- 112: Gewindestange (des Bauraumes)
- 114: Spindeltrieb (des Vorratsbehälters)
- 116: Spindeltrieb (des Bauraumes)
- 118: teleskopartig ausgebildetes Gehäuse (des Vorratsbehälters)
- 120: teleskopartig ausgebildetes Gehäuse (des Bauraumes)
- 122: Öffnungen
- 124: Doppelpfeil
- 126: Ständerrohr
- 128: Mantelrohr

## Patentansprüche

1. Vorrichtung zum Aufbau dreidimensionaler Objekte mittels mindestens eines Aufbaumaterials umfassend einen Prozessraum (30) mit mindestens einem, innerhalb des Prozessraums (30) mit Hilfe mindestens einer Antriebseinheit in mindestens einer Richtung verfahrbaren Funktionselement (88) zum Steuern eines Aufbauprozesses, wobei die Antriebseinheit mindestens ein Führungselement (52, 54, 72, 76) und mindestens ein funktional mit dem Führungselement (52, 54, 72, 76) verbundenes und relativ zu diesem bewegliches Antriebselement (50, 74) umfasst,
**dadurch gekennzeichnet,**
**dass** das mindestens eine Führungselement (52, 54, 72, 76) und das mindestens eine Antriebselement (50, 74) in mindestens einem, durch mindestens ein Separationselement (56, 66) von dem Prozessraum (30) räumlich abgegrenzten Antriebsraum (64, 90) angeordnet sind.

2. Vorrichtung nach dem vorstehenden Anspruch, **dadurch gekennzeichnet, dass** das mindestens eine Separationselement (56, 66) mit dem Antriebselement (50, 74) oder mit einem fest mit dem Antriebselement (50, 74) verbundenen Element verbunden ist.

3. Vorrichtung nach einem oder mehreren der vorstehenden Ansprüche
**dadurch gekennzeichnet, dass** das mindestens eine Führungselement (52, 54, 72, 76) und das mindestens eine Antriebselement (50, 74) in einem Antriebsgehäuse (102) angeordnet sind, das mindestens einseitig von mindestens einem, beweglich gelagerten Separationselement (56, 66) verschlossen ist.

4. Vorrichtung nach einem oder mehreren der vorstehenden Ansprüche,
**dadurch gekennzeichnet, dass** das Separationselement (56, 66) einen Rollladen (58, 68), eine Jalousie, einen Faltenbalg und/oder einen Lamellenvorhang umfasst.

5. Vorrichtung nach einem oder mehreren der vorstehenden Ansprüche,
**dadurch gekennzeichnet, dass** das Separationselement (56, 66) eine Sandwichstruktur aus einem Leichtbauwerkstoff umfasst.

6. Vorrichtung nach dem vorstehenden Anspruch, **dadurch gekennzeichnet, dass** die Sandwichstruktur eine Wabenstruktur umfasst, die beidseitig jeweils von mindestens einem in Harz getränkten Fasergewebe und/oder Fasergelege umgeben ist.

7. Vorrichtung nach dem vorstehenden Anspruch, **dadurch gekennzeichnet, dass** mindestens ein Fasergewebe und/oder Fasergelege in regelmäßigen Abständen parallel zueinander angeordnete Vertiefungen (84) aufweist.

8. Vorrichtung nach einem oder mehreren der vorstehenden Ansprüche,
**dadurch gekennzeichnet, dass** das Separationselement (56, 66) an mindestens einem Ende abgekantet ist.

9. Vorrichtung nach einem oder mehreren der vorstehenden Ansprüche,
**dadurch gekennzeichnet, dass** zwei Antriebsräume (64, 90) mit jeweils parallel zueinander verlaufenden, voneinander beabstandeten Führungsachsen (60) vorgesehen sind.

10. Vorrichtung nach einem oder mehreren der vorstehenden Ansprüche,
**dadurch gekennzeichnet, dass** Mittel vorgesehen sind, um eine gasförmige Fluidströmung aus dem mindestens einen Antriebsraum (64, 90) in den Prozessraum (30) zu erzeugen.

11. Vorrichtung nach einem oder mehreren der vorstehenden Ansprüche oder nach dem Oberbegriff des Anspruchs 1, **dadurch gekennzeichnet, dass** das Funktionselement (88) zum Steuern eines Aufbauprozesses und die Antriebseinheit Teil einer ersten Funktionseinheit (12) der Vorrichtung sind und ein Vorratsbehälter (26) für das Aufbaumaterial und der untere Bereich des Prozessraums (30) einschließlich Bauraum (28) Teil einer zweiten Funktionseinheit (14) sind, wobei die erste Funktionseinheit (12) und die zweite Funktionseinheit (14) lösbar miteinander verbunden sind.

12. Vorrichtung nach dem vorstehenden Anspruch, **dadurch gekennzeichnet, dass** die zweite Funktionseinheit (14) einen Überschussbehälter zur Aufnahme von überschüssigem Aufbaumaterial umfasst.

13. Vorrichtung nach einem oder mehreren der vorstehenden Ansprüche,
**dadurch gekennzeichnet, dass** die erste Funktionseinheit (12) und/oder die zweite Funktionseinheit (14) fahrbar ausgebildet sind.

14. Vorrichtung nach einem oder mehreren der vorstehenden Ansprüche,
**dadurch gekennzeichnet, dass** die erste Funktionseinheit (12) und die zweite Funktionseinheit (14) Schnellkupplungselemente (78) zur relativen Ausrichtung und Verbindung umfassen.

15. Vorrichtung nach dem vorstehenden Anspruch, **dadurch gekennzeichnet, dass** die Schnellkupplungselemente (78)
a) Führungsdorne (80) und korrespondierende Öffnungen und/oder
b) einen Hubmechanismus zum Anheben und/oder Ankuppeln der ersten Funktionseinheit (12) an die zweite Funktionseinheit (14) umfasst.
